# EUROPEAN PATENT APPLICATION

(11) **EP 1 657 437 A1**
(43) Date of publication of application: **17.05.2006**
(21) Application number: 04105775.3
(22) Date of filing: 15.11.2004
(51) Int. Cl.: F03D 9/00, F03D 11/00

(54) **Generator bearing arrangement in a wind power plant**

(71) Applicant: Ägir Konsult AB, 181 31 Lidingö (SE)
(72) Inventor: Engström, Staffan, 181 31 Lidingö (SE)
(74) Representative: Holmberg, Nils Anders Patrik

(57) **Abstract**

A wind power plant comprising a wind turbine (6,7), a tower (9) and a machinery bed (8), said wind turbine (6,7) propelling an electrical generator (1,2,3,4) arranged with a generator bearing arrangement (4) in or adjacent to an air gap (3) between the active parts of the rotor (1) and the stator (2) of the generator. The invention is characterised in that the wind turbine (6,7) is arranged to the machinery bed (8) by means of a bearing arrangement (10), separate from the generator bearing arrangement (4). In this way, the loads from the wind turbine are absorbed by dedicated turbine bearings.

## Description

### Field of invention

This invention regards a wind power plant comprising a wind turbine arranged to a directly driven electrical generator.

### The background of the invention

Large wind turbines rotate slowly, typically 10-30 rpm, while conventional electrical generators rotate fast, 1000-1500 rpm. The conventional technical solution for adapting the rotational speeds to each other is to use a toothed transmission gear. Large gear units are however complex and thus expensive. Furthermore, in combination with wind turbines they have demonstrated a low technical availability. These are reasons why to use direct drive generators, which due to a high pole number and a large diameter can obtain the necessary torque at the low rotational speeds. They may be designed with one or several radial, axial or transversal air gaps. The conventional solution for magnetising the generator rotor is with electrical windings, but today permanent magnets are used increasingly for this purpose. Traditionally the rotor of the generator has been arranged to the stator by a central shaft and bearings. Due to the large dimensions, the large forces and the long load paths such generators become heavy and thus also expensive, which has limited their expansion.

WO 2004/068678 describes a new type of direct drive generator distinguished by rotor bearings in or adjacent to the air gap of the stator. Due to the decrease of the load paths for the forces between the rotor and the stator of the generator, this design is lighter and thus cheaper.

DE 10255745 describes how a direct drive generator with rotor bearings in connection with the air gap of the stator may be integrated in a wind power plant. Here the generator bearings are utilised for connecting the wind turbine with the machinery bed, and further to the tower. One advantage with this design is that the generator bearings in this way get a dual use. A severe disadvantage is however the very large forces from the turbine that have to be absorbed by the bearings in the periphery of the generator, which once again result in long load paths and thus a heavy weight and a large cost.

### The fundamental idea of the invention

The fundamental idea of the invention is to integrate a generator, furnished with rotor bearings adjacent to the air gap, in a wind power plant in such a way that the forces from the wind turbine are absorbed by dedicated turbine bearings.

A wind power plant according to the invention comprises a wind turbine, a tower and a machinery bed, said wind turbine propelling an electrical generator arranged with a generator bearing arrangement in or adjacent to an air gap between the active parts of the rotor and stator of the generator. The invention is characterised in that the wind turbine is arranged to the machinery bed by means of a bearing arrangement, separate from the generator bearing arrangement.

### Summary of enclosed drawings

Figure 1 schematically depicts the machinery of a wind power plant according to the invention.

Figure 2 is a detailed view of Figure 1.

### Detailed description of preferred embodiments of the invention

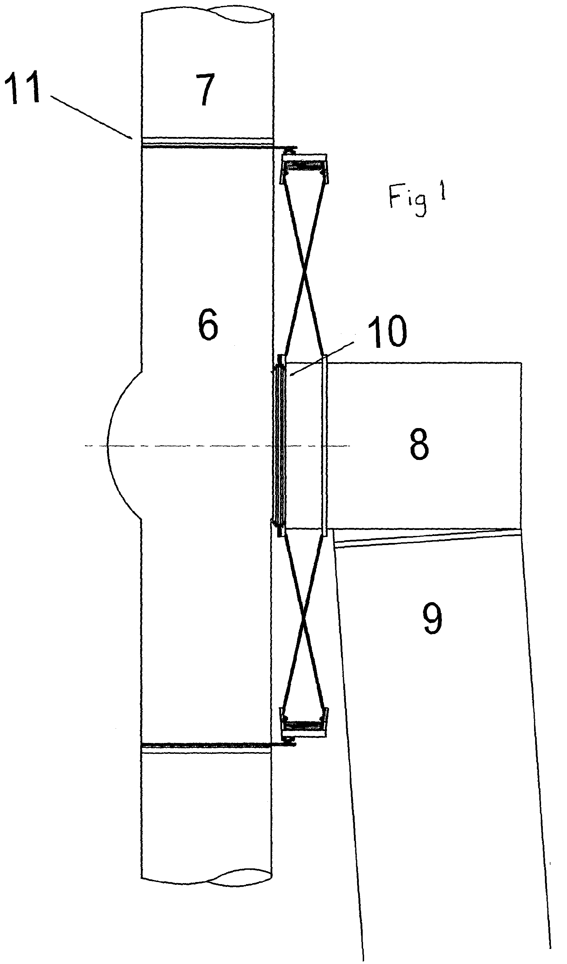

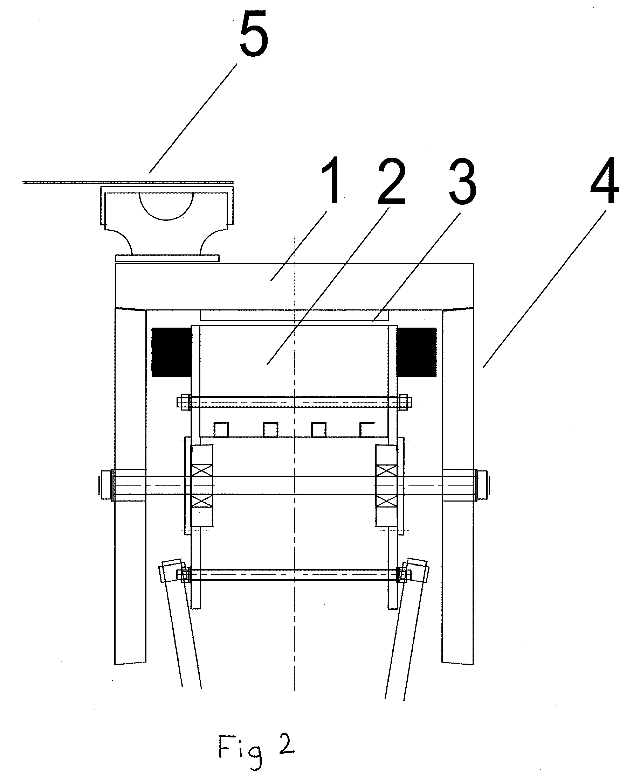

One embodiment of the invention is described with reference to Figures 1 and 2, depicting a generator with a radial air gap arranged to a wind power plant.

A wind power plant according to the invention comprises a wind turbine 6, 7, a tower 9 and a machinery bed 8. The wind turbine 6, 7 is propelling an electrical generator 1, 2, 3, 4 arranged with generator bearing arrangement 4 in or adjacent to an air gap 3 between the active parts of the rotor 1 and stator 2 of the generator. The wind turbine 6, 7 is arranged to the machinery bed 8 by means of a turbine bearing arrangement 10, separate from the generator bearing arrangement 4.

In Figure 2, the rotor 1 is arranged radially outside the stator 2, forming a radial air gap 3 between them.

As shown in Figure 2, the rotor bearings 4 may comprise of several pairs of rolling elements, acting against bearing races on the rotor 1 and arranged to the stator 2. Alternatively, the bearing races may be arranged on the stator 2 and the rolling elements arranged to the rotor 1.

The bearing arrangement 4 also can be designed in other ways, such as a roller bearing with a diameter corresponding to the air gap 3 diameter. It also may be designed as sliding bearings or as magnet bearings.

Reference number 5 represents a resilient connecting member arranged for transmitting torque between the wind turbine 6, 7 and the generator 1, 2, 3, 4. The generator rotor 1 is arranged to the wind turbine 6, 7 via member 5.

As mentioned above, the wind turbine 6, 7, comprising a hub 6 and at least one turbine blade 7, is arranged to the machinery bed 8 and further to the tower 9 by a dedicated turbine bearing arrangement 10.

In a preferred embodiment the arrangement 10 comprise of a single bearing capable of absorbing both forces and momentum. In a more conventional design, it may be composed by e.g. two axially displaced bearings, e.g. two spherical roller bearings or one spherical roller bearing and one cylindrical roller bearing. Each turbine blade 7 may be pitchable around its own axis by means of a blade pitch bearing 11.

The design implies that forces and momentum from the wind turbine, except the driving torque, are absorbed by the turbine bearing 10. The driving torque is transferred from the wind turbine 6, 7 to the rotor 1 of the generator by a number of the resilient elements 5. The resilience in the elements may come from use of rubber or other elastomeric material. The reason for the need for the resilient property is that this is a way to avoid unwanted forces from deformation of the wind turbine and generator to enter the generator bearing arrangement 4.

Further advantages of these resilient elements 5 are to damp any tendencies of resonances and to decrease the influence of a short circuit, since the short circuit normally is a dimensioning factor of the mechanical structure of a generator. It is appropriate to connect the wind turbine 6, 7 and the generator rotor 1 just inside the blade pitch bearing 11, seen from the axis of rotation of the wind turbine 6, 7. E.g. in the case where there is no blade bearing 11, the connection may be made between the turbine blade 7 and the generator rotor 1. An alternative way to transfer the torque to the generator rotor 1 is to use a resilient torque carrier, which extends from the turbine shaft.

The design also implies that the diameter of the generator bearing arrangement 4 is larger than the diameter of the turbine bearing arrangement 10, possibly about the double or more.

In a preferred embodiment the magnetising of the generator rotor 1 is performed by permanent magnets instead of conventional electrical windings.

The person skilled in the art will realise that the same principal design may be adapted to generators with an internal rotor and with several air gaps, and for an axial or a transversal design of the generator, with one or several air gaps. Generators with axial and transversal air gaps are described in e.g. Anders Grauers, Design of Direct-Driven Permanent-Magnet Generators for Wind Turbines, Technical Report No. 292 1996, School of Electrical and Computer Engineering, Chalmers University of Technology, Gothenburg Sweden, p. 16-18.

The distance means (shown in Figure 1) for keeping the generator stator 2 in place may comprise of spoke-like rods in a manner known per se, or any other suitable stiffening means of low weight.

In summary the invention implies that a wind power plant may be built with minimal load paths, both regarding forces internal of the generator and regarding those that need to be transferred from the wind turbine to the machinery bed and to the tower. This also means minimising weight and cost.

## Claims

1. A wind power plant comprising a wind turbine (6, 7), a tower (9) and a machinery bed (8), said wind turbine (6, 7) propelling an electrical generator (1, 2, 3, 4) arranged with a generator bearing arrangement (4) in or adjacent to an air gap (3) between the active parts of the rotor (1) and stator (2) of the generator, **characterised in that** the wind turbine (6, 7) is arranged to the machinery bed (8) by means of a bearing arrangement (10), separate from the generator bearing arrangement (4).

2. A wind power plant according to claim 1, **characterised in that** the transmission of torque between the wind turbine (6, 7) and the generator (1, 2, 3, 4) is performed by means of at least one resilient element (5).

3. A wind power plant according to claim 2, **characterised in** a connection between the wind turbine (6, 7) and the generator rotor (1).

4. A wind power plant according to claim 1, **characterised in that** the generator bearing arrangement (4) comprise of rolling elements arranged to either of the rotor (1) or the stator (2), and that the bearings (4) are in contact with bearing races arranged to the other of the rotor (1) or the stator (2).

5. A wind power plant according to claim 1, **characterised in that** said turbine bearing arrangement (10) consists of a single bearing.

6. A wind power plant according to claim 1, **characterised in that** the diameter of the generator bearing arrangement (4) is larger than that of the turbine bearing arrangement (10).

7. A wind power plant according to claim 1, **characterised in that** the magnetising of the generator rotor (1) is performed by permanent magnets.

8. A wind power plant according to claim 1, **characterised in that** the generator (1, 2, 3, 4) has at least one radial air gap.

9. A wind power plant according to claim 8, **characterised in that** the generator rotor (1) is arranged in the radial direction outside the stator (2).

10. A wind power plant according to claim 1, **characterised in that** the generator (1, 2, 3, 4) has at least one axial or transversal air gap.
